# EUROPÄISCHE PATENTSCHRIFT

(11) **EP 3 339 142 B1**
(45) Veröffentlichungstag und Bekanntmachung des Hinweises auf die Patenterteilung: **29.01.2020**
(21) Anmeldenummer: 17205455.3
(22) Anmeldetag: 05.12.2017
(51) Int. Cl.: B62D 25/18

(54) **PROFILANORDNUNG**
PROFILE ASSEMBLY
AGENCEMENT DE PROFILÉ

(30) Priorität: 22.12.2016 DE 202016107279 U
(43) Veröffentlichungstag der Anmeldung: 27.06.2018
(73) Patentinhaber: REHAU AG + Co, 95111 Rehau (DE)
(72) Erfinder: Schwarz, Michael, 64646 Heppenheim (DE)

(56) Entgegenhaltungen:
- DE-A1- 19 902 218
- DE-A1-102013 107 114
- DE-U1- 9 412 273
- GB-A- 2 169 862
- GB-A- 2 209 720

## Beschreibung

Die Erfindung betrifft eine Profilanordnung zur Beseitigung störender Sprühwasserbildung wenigstens eines Fahrzeugrades, eines PKW, eines LKW, eines Busses, eines Hängers und dergleichen, welche parallel zur Sichtfläche des Fahrzeugrades von diesem beabstandet, parallel zur Fahrtrichtung angeordnet ist, bestehend aus wenigstens einem polymeren Werkstoff, umfassend wenigstens eine Basis, wenigstens einem, in einem spitzen Winkel davon wegragenden Profilelement, wenigstens einem Leitungselement sowie wenigstens einem Dämpfungselement, welche der Sichtfläche des Fahrzeugrades zugewandt sind, sowie ein Fahrzeugrad mit einer derartigen Profilanordnung.

Derartige Profilanordnungen zur Beseitigung störender Sprühwasserbildung wenigstens eines Fahrzeugrades sind im Stand der Technik bereits offenbart.

So offenbart die DE 3 102 805 A1 eine Profilanordnung zur Beseitigung störender Sprühwasserbildung durch Fahrzeugreifen, bestehend aus einem flächigen, zur Anordnung im Umfangsbereich des Reifen bestimmten Gebildes, dessen dem jeweiligen Reifen zugewandte Oberfläche mit einer Vielzahl von flexiblen Einzelelementen versehen ist, wobei die flexiblen Einzelelement in Form schlanke, zumindest im Wesentlichen aufrechtstehende Stöpsel besitzen. Diese Stöpsel sollen dabei in unsymmetrischer Verteilung auf einem flächigen Gebilde angeordnet sein, welches als Kotflügel ausgebildet ist. Weiterhin weisen die Stöpsel zwei im Wesentlichen zylindrische Abschnitte unterschiedlichen Querschnitts auf, und sind in ihrer Länge teilweise unterschiedlich sowie in einem symmetrischen Rechteckraster angeordnet.

Nachteilig bei dieser Profilanordnung sind die hohen Herstellungskosten durch die relativ komplizierte Geometrie sowie Anordnung der einzelnen Stöpsel verteilt über die Fläche.

Ein weiterer Nachteil dieser Profilanordnung besteht darin, dass bei dem durch ein Fahrzeugrad aufgeworfenen Sprühwasser dieses durch die an der Grundfläche des Kotflügels angeordneten Stöpsel relativ großflächig reflektiert wird. Somit ist nachteiliger Weise die Funktion zur Profilanordnung zur Beseitigung störender Sprühwasserbildung nicht gewährleistet, da das reflektierte Wasser wieder zurück zum Fahrzeugrad bewegt und von dort entweder auf die Fahrbahn oder in den laufenden Verkehr gespritzt wird.

Weiterhin nachteilig bei dieser Profilanordnung ist, dass das ankommende Sprühwasser, welches beispielsweise auch mit festen Stoffen wie Sand, Steinen und dergleichen vermischt ist, zu einer Beschädigung bzw. auch zu einer Funktionsbeeinträchtigung dieser komplex aufgebauten Profilanordnung führt.

Ebenfalls nachteilig in dieser Ausführung der Profilanordnung nach dem Stand der Technik ist, dass das durch das Fahrzeugrad bzw. den Fahrzeugreifen aufgeworfene Sprühwasser durch diese Profilanordnung nicht vollständig vom Rad weg und auf die Straße zuführbar ist, bedingt durch komplexe, enge Anordnung sowie die Struktur der einzelnen Stöpsel.
Die DE 9412273 U1 offenbart eine Profilanordnung zur Begrenzung des Freiraums um mindestens ein Fahrzeuggrad, die Spritzwasser auffängt und ableitet, welche im Wesentlichen von einer vertikal verlaufenden Schürze gebildet ist und an der dem Rad zugewandten Seite eine Struktur aufweist, die von mehreren übereinander an der Schürze an geformten Rippen gebildet ist, an deren freien Enden T-förmige Querstege angeformt sind, wobei je zwei benachbarte Rippen zusammen mit der Schürze eine Wasserauffangrinne bilden, wobei jede Rippe im spitzen Winkel zur Schürze nach oben gerichtet ist, wobei der Quersteg an seiner der Rippe abgewandten Seite eine konkave Krümmung aufweist und dessen oberes Ende auf die darüber liegende Rippe gerichtet ist. Es ist auch offenbart, dass die Rippen zueinander parallel verlaufen und dass die Profilanordnung aus Kunststoff, Gummi o. einem Verbundwerkstoff hergestellt ist.
Die DE 102013107114 A offenbart ein Befestigungselement zur Montage einer Schürze, insbesondere einer Antisprayschürze, an einem Nutzfahrzeugaufbau, wobei das Befestigungselement an verschiedenen Positionen des Nutzfahrzeugaufbaus befestigbar ist und einen Steg umfasst, welche einen ersten Verbindungsabschnitt, welche insbesondere einen ersten Eingriffsabschnitt bildet und einen zweiten Eingriffsabschnitt miteinander verbindet, wobei der erste Verbindungsabschnitt zur Verbindung mit einem Außenrahmensegment des Nutzfahrzeugaufbaus ausgebildet ist und der zweite Eingriffsabschnitt zur Verbindung mit der Schürze derart ausgebildet ist, dass die Schürze verschiebbar gelagert oder lagerbar ist. Es wird weiterhin offenbart, dass das Befestigungselement als metallisches Strangpressprofil bspw. aus Aluminium gefertigt sein kann. Weiterhin offenbart ist, dass das Befestigungselement eine flexible Dichtlippe aufweist, die an der Außenseite des Befestigungselements angeordnet ist.

Hier setzt die Erfindung ein, die sich die Aufgabe gestellt hat, die Nachteile des bekannten Stande der Technik zu überwinden und eine Profilanordnung zur Beseitigung störender Sprühwasserbildung eines Fahrzeugrades aufzuzeigen, welche wirtschaftlich und kostengünstig herstellbar ist, die auch unter ungünstigsten Bedingungen eine störende Spürwasserbildung zumindest weitestgehend eliminiert und die das störende Sprühwasser von dem Fahrzeugrad bzw. dem Fahrzeugreifen wegtransportiert; sowie ein Fahrzeugrad mit einer derartigen Profilanordnung.

Erfindungsgemäß ist diese Aufgabe durch eine Profilanordnung gemäß den Merkmalen des Anspruches 1 gelöst. Weitere vorteilhafte Ausgestaltungen sind in den Unteransprüchen beschrieben.

Es konnte überraschend festgestellt werden, dass eine Profilanordnung zur Beseitigung störender Sprühwasserbildung wenigstens eines Fahrzeugrades, eines PKW, eines LKW, eines Busses, eines Hängers und dergleichen, welche parallel zur Sichtfläche des Fahrzeugrades von diesem beabstandet, parallel zur Fahrtrichtung, angeordnet ist, bestehend aus wenigstens einem polymeren Werkstoff, umfassend wenigstens eine Basis, mit wenigstens einem, in einem spitzen Winkel davon wegragenden Profilelement, wenigstens einem Leitungselement, sowie wenigstens einem Dämpfungselement, welche der Sichtfläche des Fahrzeugrads zugewandt sind, sich dadurch auszeichnet, dass das Profilelement wenigstens ein, in einem spitzen und / oder stumpfen Winkel zur Basis angeordnetes Dämpfungselement aufweist, dass das Dämpfungselement zumindest teilweise aus einem weichelastischen, polymeren Werkstoff hergestellt ist mit einer Härte Shore A gemäß DIN EN ISO 868 von etwa 50 bis 95, bevorzugt 60 bis 90 und dass das Dämpfungselement einstückig mit dem Profilelement verbunden ist. Die erfindungsgemäße Profilanordnung verhindert so eine störende Sprühwasserbildung insbesondere den seitlichen Wasseraustritt an einem Fahrzeugrad eines PKWs, LKWs, eines Hängers und dergleichen, da durch die vorteilhafte Geometrie, Anordnung sowie Werkstoffauswahl des Profilelementes, des Dämpfungselementes sowie des Leitungselementes das störende Sprühwasser in der Profilanordnung gesammelt und so seitlich bzw. in Fahrtrichtung des Fahrzeugrades nach hinten kontrolliert abgegeben wird.

Weiterhin zeichnet sich die erfindungsgemäße Profilanordnung dadurch aus, dass durch die spitzwinklige Anordnung des Profilelementes zusammen mit dem spritzwinklig und / oder stumpfwinklig angeordneten Dämpfungselementen das auftreffende Sprühwasser gedämpft und in die durch die Basis und das Profilelement gebildeten Abflussrinnen übergeleitet wird.

Die erfindungsgemäße Profilanordnung ist so ausgebildet, dass das vom Fahrzeugrad auftreffende Sprühwasser nicht reflektiert also zum Fahrzeugrad zurückgespritzt wird, sondern erfindungsgemäß über die Dämpfungselemente in die vom Profilelement und der Basis gebildeten Abflussrinnen überführbar sowie wegleitbar ist.

Die erfindungsgemäße Profilanordnung ist vorteilhafterweise so ausgebildet, dass das Dämpfungselement von dem, der Basis gegenüberliegend angeordneten freien Ende des Profilelementes, beabstandet angeordnet ist. In dieser vorteilhaften Ausgestaltung der erfindungsgemäßen Profilanordnung wird auftreffendes Sprühwasser zum einen in dem vom freien Ende des Profilelementes sowie dem Dämpfungselement gebildeten Kanal geleitet und das restliche Sprühwasser über das sich zur Basis hin wegbiegende Dämpfungselement in den vom Profilelement und der Basis gebildeten Abflussrinne überführbar und wegleitbar ist.

In einer weiteren vorteilhaften Ausgestaltung der erfindungsgemäßen Profilanordnung ist das Verhältnis der Höhe des Dämpfungselements zur Höhe des Profilelements < 0,5. Hierdurch kann das Profilelement wirtschaftlich und kostengünstig hergestellt werden und entsprechend der Menge des aufzunehmenden, störenden Sprühwassers optimal ausgebildet werden.

Ein weiterer Vorteil der erfindungsgemäßen Profilanordnung besteht darin, dass das Dämpfungselement beweglich am Profilelement angeordnet ist. Das Dämpfungselement ist über seine Höhe über die gesamte Länge der erfindungsgemäßen Profilanordnung beweglich am Profilelement angeordnet. Bei bestimmungsgemäßer Verwendung der erfindungsgemäßen Profilanordnung zur Beseitigung störender Sprühwasserbildung trifft das Sprühwasser auf das Dämpfungselement auf, welches vorteilhafterweise in einem spitzen Winkel zur Basis angeordnet ist und wird durch die Kraft bzw. den Druck des Sprühwassers zur Basis hin bzw. zum Profilelement hin gebogen, sodass das Sprühwasser hinter das jeweilige Dämpfungselement in die vom Profilelement und der Basis gebildeten Abflussrinne einführbar bzw. wegleitbar ist.

Es hat sich weiterhin als vorteilhaft bei der erfindungsgemäßen Profilanordnung gezeigt, dass ein erstes Dämpfungselement in einem spitzen Winkel zur Basis angeordnet ist und / oder das ein zweites Dämpfungselement in einem stumpfen Winkel zur Basis am Profilelement angeordnet ist. Durch diese vorteilhafte Ausgestaltung der erfindungsgemäßen Profilanordnung ist diese einerseits wirtschaftlich und kostengünstig herstellbar und andererseits in der Lage, störende Sprühwasserbildung eines Fahrzeugrades nahezu komplett auszuschalten und dieses Sprühwasser in sich aufzunehmen, weiterzuleiten und insbesondere nach hinten ohne andere Verkehrsteilnehmer zu beeinflussen, abzugeben.

In einer weiteren vorteilhaften Ausgestaltung der erfindungsgemäßen Profilanordnung ist das erste Dämpfungselement direkt über das Profilelement beabstandet, angeordnet. Das erfindungsgemäße Profilelement bestehend aus wenigstens einem polymeren Werkstoff und lässt sich somit vorteilhafterweise im Extrusionsverfahren, im Coextrusionsverfahren sowie im Postcoextrusionsverfahren wirtschaftlich und kostengünstig herstellen.

In einer ebenfalls vorteilhaften Ausgestaltung weist die erfindungsgemäße Profilanordnung zumindest teilweise einen polymeren Werkstoff auf, ausgewählt aus der Gruppe wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-StyrolCopolymere (ABS) oder Styrolacrylnitril (SAN); Polybutylentherephthalat (PBT); Polyethylentherephthalat (PET); Polyamid (PA); Polymethylmethacrylat (PMMA); sowie Mischungen aus wenigstens zwei dieser Materialien.

Es konnte weiterhin festgestellt werden, dass bei der erfindungsgemäßen Profilanordnung das Dämpfungselement wenigstens teilweise einen polymeren Werkstoff aufweist, ausgewählt aus der Gruppe der Thermoplastischen Elastomere bspw. auf Olefinbasis (TPE) und/oder auf Urethanbasis (TPU), der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide. Weiterhin der weichmacherhaltigen Werkstoffe, bevorzugt Polypropylen (PP), Acrylnitril-Butadien-StyrolCopolymerisat (ABS), Polycarbonat (PC), Polyvinylchlorid (PVC), Polymethylmethacrylat (PMMA), Polyethylenterephthalat (PET), Polyurethan (PUR) und dgl., sowie aus Mischungen dieser Werkstoffe.

In einer ebenfalls vorteilhaften Ausgestaltung der erfindungsgemäßen Profilanordnung ist das freie Ende des ersten Dämpfungselementes über einen Spalt (S) von einem gegenüberliegend angeordneten freien Ende eines zweiten Dämpfungselementes beabstandet, angeordnet. In dieser vorteilhaften Ausgestaltung ist die erfindungsgemäße Profilanordnung so ausgebildet, dass das seitlich auftreffende störende Sprühwasser eines Fahrzeugrades nahezu vollständig in dieser aufnehmbar und von dem Fahrzeugrad wegleitbar ist.
Die erfindungsgemäße Profilanordnung ist somit in der Lage, störendes Sprühwasser eines beabstandet angeordneten Fahrzeugrades problemlos aufzunehmen, unabhängig von der Menge des störenden Sprühwassers.
Es hat sich weiterhin als vorteilhaft herausgestellt, wenn der Spalt (S) dabei etwa 1 bis 30 mm, bevorzugt 2 bis 15 mm ausgebildet ist. Dies führt vorteilhafterweise zu einer besseren Funktionalität der Profilanordnung sowie zu einer optimierten Ableitung des Sprühwassers.

Weiterhin ist die erfindungsgemäße Profilanordnung so ausgebildet, dass das Dämpfungselement im Querschnitt etwa prismatisch, rund, oval, dreieckig und dergleichen ausgebildet ist. Dies lässt neben der optimierten Aufnahme störenden Sprühwassers auch eine effiziente, wirtschaftliche und kostengünstige Herstellung der erfindungsgemäßen Profilanordnung zu.
Es hat sich weiterhin als vorteilhaft herausgestellt bei der erfindungsgemäßen Profilanordnung, dass das Leitungselement der Profilanordnung im Querschnitt etwa halbrund ausgebildet ist. Hierdurch kann das seitlich vom Fahrzeugrad auftreffende, störende Sprühwasser, welches nicht in die durch das Profilelement und der Basis gebildeten Abflussrinnen aufnehmbar und wegleitbar ist, zusätzlich aufnehmbar und wegleitbar ist.

Vorteilhafterweise ist die erfindungsgemäße Profilanordnung noch so ausgebildet, dass das Leitungselement der Profilanordnung an dem, dem Fixierelement gegenüberliegend angeordnetem freien Ende, angeordnet ist. Hierdurch kann eine erfindungsgemäße Profilanordnung zur Verfügung gestellt werden, die hinsichtlich der Größe des Fahrzeugrades und der sich daraus ergebenden störenden Sprühwasserbildung optimal herstellbar und optimal dimensionierbar ist.

Dabei hat sich vorteilhafterweise herausgestellt bei der erfindungsgemäßen Profilanordnung, dass das Leitungselement der Profilanordnung einen Radius von etwa 5 bis 50 mm, bevorzugt 5 bis 20 mm aufweist. Hierdurch kann eine erfindungsgemäße Profilanordnung zur Verfügung gestellt werden, die in ihrem Gesamtaufbau an jedes Fahrzeugrad eines PKWs, eines LKWs, eines Busses, eines Hängers und dergleichen anpassbar ist und die in der Lage ist, das störende Sprühwasser des Fahrzeugrades optimal zu beseitigen.

Ebenfalls vorteilhaft bei der erfindungsgemäßen Profilanordnung ist, dass an der Basis der Profilanordnung wenigstens drei äquidistant zueinander angeordnete Profilelemente angeordnet sind. Durch die Anzahl und / oder die Anordnung der einzelnen Profilelemente kann die erfindungsgemäße Profilanordnung den jeweiligen Anforderungen an die Menge bzw. den Druck des zu beseitigenden, störenden Sprühwassers eines Fahrzeugrades eines PKWs, eines LKWs, eines Busses, eines Hängers und dergleichen optimal angepasst werden.

Ein weiterer Vorteil der erfindungsgemäßen Profilanordnung besteht darin, dass das Profilelement wenigstens zwei, voneinander beabstandet angeordnete Dämpfungselemente aufweist. Dies führt wiederum zu einer optimalen Beseitigung störenden Sprühwassers durch die erfindungsgemäße Profilanordnung.

Die erfindungsgemäße Profilanordnung zeichnet sich weiterhin dadurch aus, dass am Leitungselement wenigstens ein Befestigungselement angeordnet ist. Hierdurch kann die erfindungsgemäße Profilanordnung den unterschiedlichen geometrischen Anforderungen zur Montage beabstandet zur Sichtfläche eines Fahrzeugrades eines PKWs, eines LKWs, eines Busses, eines Hängers und dergleichen optimal angepasst werden.

Ebenfalls vorteilhaft bei der erfindungsgemäßen Profilanordnung ist, dass an dem, dem Leitungselement gegenüberliegenden freien Ende der Profilanordnung ein, die Profilelemente überragendes, Abdeckelement angeordnet ist. In dieser vorteilhaften Ausgestaltung der erfindungsgemäßen Profilanordnung ist einerseits deren einfache und sichere Montage parallel zur Sichtfläche des Fahrzeugrades und von diesem beabstandet, parallel zur Fahrtrichtung, möglich insbesondere für die unterschiedlichen geometrischen Einbausituationen sowie die Menge des zu beseitigenden, störenden Sprühwassers eines PKWs, eines LKWs, eines Busses, eines Hängers und dergleichen.

Die Erfindung betrifft weiterhin ein Fahrzeugrad mit einer parallel zur Sichtfläche von diesem beabstandet, parallel zur Fahrtrichtung angeordneten Profilanordnung gemäß den obigen Ausführungen.

Die erfindungsgemäße Profilanordnung soll nun an diesen nicht einschränkenden Ausführungsbeispielen näher beschrieben werden.

Es zeigen:
- Fig. 1:: prinzipielle Draufsicht einer Profilanordnung mit einem Fahrzeugrad;
- Fig. 2:: perspektivische Darstellung einer erfindungsgemäßen Profilanordnung.

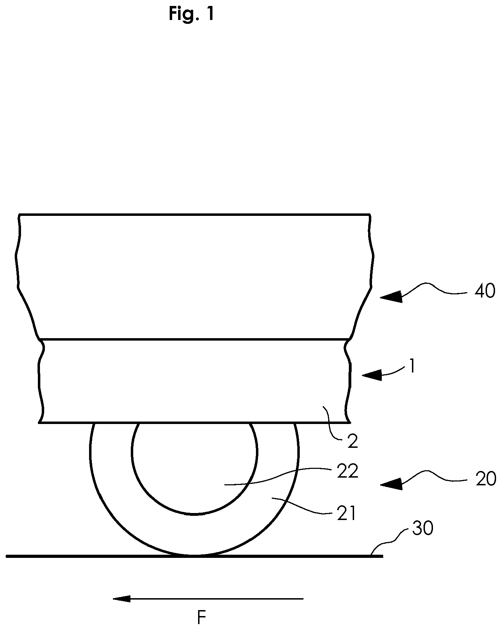

In der Fig. 1 ist eine Draufsicht einer erfindungsgemäßen Profilanordnung 1 mit einem Fahrzeugrad 20 dargestellt.

Die Profilanordnung 1 zur Beseitigung störender Sprühwasserbildung eines Fahrzeugrades 20 ist parallel zur Sichtfläche des Fahrzeugrades 20, welches aus der Felge 22 und dem Reifen 21 gebildet ist, von diesem beabstandet, parallel zur Fahrtrichtung (F) angeordnet. Das Fahrzeugrad 20 des nicht dargestellten Fahrzeuges beispielsweise eines PKWs, eines LKWs, eines Busses, eines Hängers und dergleichen bewegt sich auf der Fahrbahn 30 in Fahrtrichtung (F).
Auf einer regennassen Fahrbahn 30 wird Wasser von der Oberfläche des Reifens 21 aufgenommen und über die Profilfläche des Reifens 21 tangential transportiert und gegen das Karosserieelement 40 geschleudert, an dessen freien Enden die erfindungsgemäße Profilanordnung 1 angeordnet ist.

Das von der Fahrbahn 30 über den Reifen 21 aufgenommene Wasser wird von dem Karosserieelement 40 reflektiert bzw. zurückgespritzt auf den Reifen 21 und gelangt von dort an das erfindungsgemäße Profilelement 1.

Das Profilelement 1 umfasst eine Basis 2 die etwa parallel zur Sichtfläche des Fahrzeugrades 20 angeordnet ist. Auf der nicht sichtbaren Seite der Basis 2 der Profilanordnung 1 sind von der Basis wegragende Profilelemente, ein Leitungselement sowie wenigstens ein Dämpfungselement angeordnet.

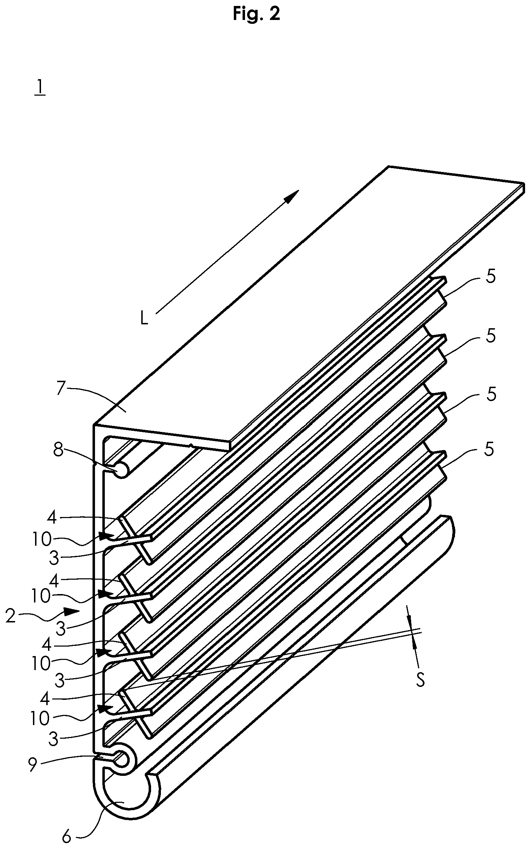

Die Profilanordnung 1, welche im Detail in der Fig. 2 beschrieben ist, nimmt das vom Fahrzeugrad 20 aufgenommene Wasser der Fahrbahn in sich auf und leitet es in Fahrtrichtung gesehen nach hinten vom Fahrzeugrad 20 weg, sodass ein neben diesem Fahrzeugrad 20 des Fahrzeuges vorbeifahrendes Fahrzeug mit diesem, von der Fahrbahn 30 aufgenommenen Wasser, nicht konfrontiert wird.

In der Fig. 2 ist eine perspektivische Darstellung eines Abschnittes der erfindungsgemäßen Profilanordnung 1 dargestellt.

Die Profilanordnung 1 weist eine Basis 2, mit in einem spitzen Winkel davon wegragenden Profilelementen 3, wenigstens einem Leitungselement 6 sowie Dämpfungselementen 4, 5 auf.

Die Profilanordnung 1 ist weiterhin so ausgebildet, dass in diesem Ausführungsbeispiel insgesamt vier Profilelemente 3 an der Basis 2 einstückig angeordnet sind.

Jedes Profilelement 3 der Profilanordnung 1 weist wenigstens ein, in einem spitzen und / oder stumpfen Winkel zur Basis 2 angeordnetes Dämpfungselement 4, 5 auf. Das Dämpfungselement 4, 5 ist zumindest teilweise aus einem weichelastischen, polymeren Werkstoff hergestellt mit einer Härte Shore A gemäß DIN EN ISO 868 von etwa 50 bis 95, bevorzugt 60 bis 90, in diesem Ausführungsbeispiel mit 85.
Das Dämpfungselement 4, 5 ist einstückig mit dem jeweiligen Profilelement 3 der Profilanordnung 1 verbunden.

Das Dämpfungselement 4, 5 ist von dem, der Basis 2 gegenüberliegend angeordneten freien Ende des Profilelements 3, beabstandet angeordnet. Der Abstand beträgt vorteilhafterweise etwa 3 bis 20, vorzugsweise 3 bis 15 mm, in diesem Ausführungsbeispiel etwa 7 mm.

Die Dicke des Dämpfungselements 4, 5 entspricht etwa der Dicke des Profilelements 3 mit etwa 2 bis 10 mm, bevorzugt 2,5 bis 5 mm, in diesem Ausführungsbeispiel etwa 3 mm.

In diesem Ausführungsbeispiel ist das Verhältnis der Höhe des Dämpfungselements 4, 5 zur Höhe des Profilelements 3 etwa 0,4.

Das Dämpfungselement 4, 5 ist in Profillängsrichtung (L) einstückig und über seine Höhe beweglich am Profilelement 3 angeordnet.
Die Profilanordnung 1 ist weiterhin so ausgebildet, dass ein erstes Dämpfungselement 4 in etwa einem spitzen Winkel zur Basis 2 am Profilelement 3 angeordnet ist. Weiterhin ist die Profilanordnung so ausgebildet, dass ein zweites Dämpfungselement 5 in einem stumpfen Winkel zur Basis 2 am Profilelement 3 angeordnet ist.

In diesem Ausführungsbeispiel ist die Profilanordnung 1 weiterhin so ausgebildet, dass das erste Dämpfungselement 4 direkt gegenüberliegend zum zweiten Dämpfungselement 5 über das Profilelement 3 beabstandet, angeordnet ist.
Durch diese vorteilhafte Ausgestaltung der Profilanordnung 1 kann das vom nicht dargestellten Fahrzeugrad aufgenommene, störende Sprühwasser welches orthogonal auf die Innenseite der Profilanordnung 1 auftrifft von dem ersten Dämpfungselement 4, welches sich bei Beaufschlagung mit dem Sprühwasser in Richtung der Basis 2 verbiegt und so die vom Profilelement 3 und der Basis 2 gebildete Abflussrinne 10 mit dem Sprühwasser versorgt.

Aufgrund seiner Geometrie und insbesondere der weichelastischen Eigenschaften des ersten Dämpfungselements 4 sowie deren Anordnung in einem spitzen Winkel zur Basis 2 am Profilelement 3 kann das störende Sprühwasser problemlos aufgenommen und über die vom Profilelement 3 und der Basis 2 gebildete Abflussrinne 10 aufgenommen und abgeführt werden.

Die erfindungsgemäße Profilanordnung 1 ist auch weiterhin so ausgebildet, dass das zweite Dämpfungselement 5 das vom nicht dargestellten Fahrzeugrad aufgenommene Sprühwasser aufnimmt und auf das jeweils darunter befindliche Profilelement 3 weiterleitet.

Dies wird vorteilhafterweise noch unterstützt, dass das freie Ende eines ersten Dämpfungselements 4 über einen Spalt (S) von einem gegenüberliegend angeordneten freien Ende eines zweiten Dämpfungselementes 5 beabstandet angeordnet ist. Durch diese Dimensionierung insbesondere des Spaltes (S) kann die durch das nicht dargestellte Fahrzeugrad aufgenommene und an die Profilanordnung 1 weitergegebene Sprühwassermenge optimal aufgenommen, weitergeleitet und im Endbereich der Profilanordnung 1 abgegeben werden.

In diesem Ausführungsbeispiel der erfindungsgemäßen Profilanordnung 1 sind die Profilelemente 3 jeweils äquidistant zueinander angeordnet und weisen die gleiche Dicke bzw. Höhe auf. Es liegt jedoch auch im Rahmen der Erfindung, dass die an der Basis 2 der Profilanordnung 1 angeordneten Profilelemente 3 in unterschiedlichen Abständen zueinander angeordnet sind und auch unterschiedliche Dicken bzw. Höhen aufweisen können.

Die Profilanordnung 1 ist weiterhin so ausgebildet, dass diese ein Leitungselement 6, welches über ein Verbindungselement 9 zu dem Profilelement 3 beabstandet angeordnet ist, aufweist. Das Leitungselement 6 ist in diesem Ausführungsbeispiel im Querschnitt etwa halbrund ausgebildet und dient ebenfalls der Aufnahme, Weiterleitung und Abgabe von dem durch das nicht dargestellte Fahrzeugrad aufgeworfenen Sprühwasser.
Weiterhin weist die Profilanordnung 1 an dem, dem Leitungselement 6 gegenüberliegenden freien Ende ein, die Profilelemente 3 überragendes, Abdeckelement 7 auf.
Das Abdeckelement 7 der Profilanordnung 1 dient bei bestimmungsgemäßer Verwendung dazu, die Profilanordnung 1 an einem nicht dargestellten Karosserieelement 40 zu montieren bzw. zu fixieren.

Die Profilanordnung 1 ist weiterhin so ausgebildet, dass beabstandet zum Abdeckelement 7 ein weiteres Verbindungselement 8 angeordnet ist, welches im Querschnitt etwa kreisförmig ausgebildet ist.
Bei bestimmungsgemäßer Verwendung der Profilanordnung 1 zur Beseitigung störender Sprühwasserbildung wenigstens eines, nicht dargestellten Fahrzeugrades besteht nun vorteilhafterweise die Möglichkeit, die Kapazität und Aufnahmefähigkeit der Profilanordnung 1 zu erhöhen.
Dazu ist es erforderlich, von einer weiteren Profilanordnung 1 das Abdeckelement 7 von der Basis 2 oberhalb des Verbindungselements 8 zu entfernen und diese Profilanordnung 1 über das Verbindungselement 8 in eine weitere Profilanordnung 1 in das dort angeordnete zweite Verbindungselement 9 einzuführen und somit die Fläche der erfindungsgemäßen Profilanordnung 1 bzw. das Volumen zur Beseitigung störender Sprühwasserbildung zu verdoppeln.
Es liegt jedoch auch im Rahmen der Erfindung, dass auf diese Art und Weise mehrere Profilanordnungen 1 zu einem System zusammenfügbar sind.

Die Profilanordnung 1 in dieser vorteilhaften Ausführung verhindert somit den seitlichen Austritt von Sprühwasser über die Sichtfläche des nicht dargestellten Fahrzeugrades sehr wirksam.

Bei bestimmungsgemäßem Einsatz der Profilanordnung 1 zur Beseitigung störender Sprühwasserbildung wenigstens eines nicht dargestellten Fahrzeugrades 20 wird durch die vorteilhafte Anordnung, Dimensionierung und Ausgestaltung insbesondere der Dämpfungselemente 4, 5 das auftreffende Sprühwasser gedämpft und in die durch das Profilelement 3 und die Basis 2 gebildeten Abflussrinnen 10 eingeführt, von diesen weitergeleitet und am in Fahrtrichtung gesehenen Ende der Profilanordnung 1 störungsfrei abgegeben.

Die bisher im Stand der Technik bei gattungsgemäßen Profilanordnungen auftretende Reflektion bzw. das Zurückwerfen des Sprühwassers zum Fahrzeugrad kann durch die erfindungsgemäße Profilanordnung überwiegend ausgeschlossen werden.

Insbesondere durch die Wahl des Werkstoffe der Dämpfungselemente 4, 5, deren geometrischer Dimensionierung sowie der Abstand des ersten Dämpfungselementes 4 zum gegenüberliegend angeordneten zweiten Dämpfungselement 5 über den Spalt (S) führen dazu, dass die erfindungsgemäße Profilanordnung 1 sowohl für die kleineren Fahrzeugräder eines PKWs als auch für die großen Fahrzeugräder eines LKWs, eines Busses, eines Hängers und dergleichen einerseits wirtschaftlich und kostengünstig herstellbar sind und andererseits das störende Sprühwasser nahezu verlustfrei aufnehmen und störungsfrei hinter dem Fahrzeug abgeben.

## Patentansprüche

1. Profilanordnung (1) zur Beseitigung störender Sprühwasserbildung wenigstens eines Fahrzeugrades (20) eines PKW, eines LKW, eines Busses, eines Hängers und dergleichen, welche parallel zur Sichtfläche des Fahrzeugrades (20), von diesem beabstandet, parallel zur Fahrtrichtung (F), angeordnet ist, bestehend aus wenigstens einem polymeren Werkstoff, umfassend wenigstens eine Basis (2), mit wenigstens einem, in einem spitzen Winkel davon wegragenden Profilelement (3), wenigstens einem Leitungselement (6), sowie wenigstens einem Dämpfungselement (4, 5), welche der Sichtfläche des Fahrzeugrades zugewandt sind, wobei das Profilelement (3) wenigstens ein, in einem spitzen und / oder stumpfen Winkel zur Basis (2) angeordnetes Dämpfungselement (4, 5) aufweist, wobei das Dämpfungselement (4, 5) einstückig mit dem Profilelement (3) verbunden ist, **dadurch gekennzeichnet, dass** das Dämpfungselement (4, 5) zumindest teilweise aus einem weichelastischen, polymeren Werkstoff hergestellt ist mit einer Härte Shore A gemäß DIN EN ISO 868 von etwa 50 bis 95, bevorzugt 60 bis 90 und dass das Dämpfungselement (4, 5) von dem, der Basis (2) gegenüberliegend angeordneten freien Ende des Profilelements (3), beabstandet angeordnet ist, dass das Dämpfungselement (4, 5) beweglich am Profilelement (3) angeordnet ist.

2. Profilanordnung (1) nach Anspruch 1, **dadurch gekennzeichnet, dass** ein erstes Dämpfungselement (4) direkt gegenüberliegend zu einem zweiten Dämpfungselement (5) über das Profilelement (3) beabstandet, angeordnet ist.

3. Profilanordnung (1) nach einem der vorhergehenden Ansprüche, **dadurch gekennzeichnet, dass** das erste Dämpfungselement (4) in einem spitzen Winkel zur Basis (2) der Profilanordnung (1) angeordnet ist.

4. Profilanordnung (1) nach einem der vorhergehenden Ansprüche, **dadurch gekennzeichnet, dass** das zweite Dämpfungselement (5) in einem stumpfen Winkel zur Basis (2) der Profilanordnung (1) angeordnet ist.

5. Profilanordnung (1) nach einem der vorhergehenden Ansprüche, **dadurch gekennzeichnet, dass** das freie Ende des ersten Dämpfungselementes (4) über einen Spalt (S) von einem gegenüberliegend angeordneten freien Ende des zweiten Dämpfungselements (5) beabstandet angeordnet ist.

6. Profilanordnung (1) nach einem der vorhergehenden Ansprüche, **dadurch gekennzeichnet, dass** an der Basis (2) der Profilanordnung (1) wenigstens drei äquidistant zueinander angeordnete Profilelemente (3) angeordnet sind.

7. Profilanordnung (1) nach einem der vorhergehenden Ansprüche, **dadurch gekennzeichnet, dass** die Basis (2) der Profilanordnung (1) wenigstens ein Verbindungselement (8, 9) aufweist.

8. Profilanordnung (1) nach einem der vorhergehenden Ansprüche, **dadurch gekennzeichnet, dass** an dem, dem Leitungselement (6) gegenüberliegenden freien Ende der Profilanordnung (1) ein die Profilelemente (3) überragendes Abdeckelement (7) angeordnet ist.

9. Fahrzeugrad (20) eines PKW, eines LKW, eines Busses, eines Hängers und dergleichen, mit einer Profilanordnung (1) zur Beseitigung störender Sprühwasserbildung, welche parallel zur Sichtfläche des Fahrzeugrades (20), von diesem beabstandet, parallel zur Fahrtrichtung (F), angeordnet ist gemäß einem der Ansprüche 1 bis 8.

## Claims

1. A profile assembly (1) for eliminating undesirable water spray of at least one vehicle wheel (20) of a car, lorry, bus, trailer and the like, which is arranged parallel to the visible surface of the vehicle wheel (20), at a distance therefrom, parallel to the direction of travel (F), consisting of at least one polymeric material, comprising at least one base (2), with at least one profile element (3) projecting away therefrom at an acute angle, at least one conduit element (6), and at least one damping element (4, 5), which face towards the visible surface of the vehicle wheel, wherein the profile element (3) has at least one damping element (4, 5) arranged at an acute and/or obtuse angle to the base (2), wherein the damping element (4, 5) is integrally connected to the profile element (3),
**characterised in that** the damping element (4, 5) is produced at least partially from a flexible, polymeric material having a Shore A hardness according to DIN EN ISO 868 of about 50 to 95, preferably 60 to 90, and **in that** the damping element (4, 5) is arranged at a distance from the free end of the profile element (3) arranged opposite the base (2), and **in that** the damping element (4, 5) is arranged movably on the profile element (3).

2. The profile assembly (1) according to claim 1, **characterised in that** a first damping element (4) is arranged directly opposite a second damping element (5) and spaced apart therefrom via the profile element (3).

3. The profile assembly (1) according to one of the preceding claims, **characterised in that** the first damping element (4) is arranged at an acute angle to the base (2) of the profile assembly (1).

4. The profile assembly (1) according to one of the preceding claims, **characterised in that** the second damping element (5) is arranged at an obtuse angle to the base (2) of the profile assembly (1).

5. The profile assembly (1) according to one of the preceding claims, **characterised in that** the free end of the first damping element (4) is arranged such that it is spaced apart via a gap (S) from a free end of the second damping element (5) arranged opposite thereto.

6. The profile assembly (1) according to one of the preceding claims, **characterised in that** at least three mutually equidistantly arranged profile elements (3) are arranged on the base (2) of the profile assembly (1).

7. The profile assembly (1) according to one of the preceding claims, **characterised in that** the base (2) of the profile assembly (1) has at least one connecting element (8, 9).

8. The profile assembly (1) according to one of the preceding claims, **characterised in that** a covering element (7) projecting beyond the profile elements (3) is arranged on the free end of the profile assembly (1) opposite the conduit element (6).

9. A vehicle wheel (20) of a car, lorry, bus, trailer and the like, having a profile assembly (1) for eliminating undesirable water spray, which is arranged parallel to the visible surface of the vehicle wheel (20), at a distance therefrom, parallel to the direction of travel (F), according to one of claims 1 to 8.

## Revendications

1. Ensemble profilé (1) servant à éliminer toute formation d'eau de pulvérisation dérangeante d'au moins une roue de véhicule (20) d'un véhicule de tourisme, d'un poids lourd, d'un bus, d'une remorque et similaire, lequel est disposé de manière parallèle par rapport à la face visible de la roue de véhicule (20), à distance de celle-ci, de manière parallèle par rapport à la direction de déplacement (F), constitué d'au moins un matériau polymère, comprenant au moins une base (2), avec au moins un élément profilé (3) dépassant de celle-ci selon un angle aigu, au moins un élément de conduction (6), ainsi qu'au moins un élément d'amortissement (4, 5), lesquels sont tournés vers la face visible de la roue de véhicule, dans lequel l'élément profilé (3) présente au moins un élément d'amortissement (4, 5) disposé selon un angle aigu et/ou obtus par rapport à la base (2), dans lequel l'élément d'amortissement (4, 5) est relié d'un seul tenant à l'élément profilé (3), **caractérisé en ce que** l'élément d'amortissement (4, 5) est fabriqué au moins en partie à partir d'un matériau polymère élastique souple avec une dureté Shore A selon la norme DIN EN ISO 868 d'environ 50 à 95, de préférence de 60 à 90, et que l'élément d'amortissement (4, 5) est disposé à distance de l'extrémité libre, disposée de manière opposée à la base (2), de l'élément profilé (3), que l'élément d'amortissement (4, 5) est disposé de manière mobile au niveau de l'élément profilé (3).

2. Ensemble profilé (1) selon la revendication 1, **caractérisé en ce qu'**un premier élément d'amortissement (4) est disposé directement de manière opposée par rapport à un deuxième élément d'amortissement (5) à distance par l'intermédiaire de l'élément profilé (3).

3. Ensemble profilé (1) selon l'une quelconque des revendications précédentes, **caractérisé en ce que** le premier élément d'amortissement (4) est disposé selon un angle aigu par rapport à la base (2) de l'ensemble profilé (1).

4. Ensemble profilé (1) selon l'une quelconque des revendications précédentes, **caractérisé en ce que** le deuxième élément d'amortissement (5) est disposé selon un angle obtus par rapport à la base (2) de l'ensemble profilé (1).

5. Ensemble profilé (1) selon l'une quelconque des revendications précédentes, **caractérisé en ce que** l'extrémité libre du premier élément d'amortissement (4) est disposée à distance par l'intermédiaire d'une fente (S) d'une extrémité libre, disposée de manière opposée, du deuxième élément d'amortissement (5).

6. Ensemble profilé (1) selon l'une quelconque des revendications précédentes, **caractérisé en ce qu'**au moins trois éléments profilés (3) disposés à équidistance les uns par rapport aux autres sont disposés au niveau de la base (2) de l'ensemble profilé (1).

7. Ensemble profilé (1) selon l'une quelconque des revendications précédentes, **caractérisé en ce que** la base (2) de l'ensemble profilé (1) présente au moins un élément de liaison (8, 9).

8. Ensemble profilé (1) selon l'une quelconque des revendications précédentes, **caractérisé en ce qu'**un élément de recouvrement (7) dépassant des éléments profilés (3) est disposé au niveau de l'extrémité libre, opposée à l'élément de conduction (6), de l'ensemble profilé (1).

9. Roue de véhicule (20) d'un véhicule de tourisme, d'un poids lourd, d'un bus, d'une remorque et similaire, avec un ensemble profilé (1) servant à éliminer toute formation d'eau de pulvérisation dérangeante, lequel est disposé de manière parallèle par rapport à la face visible de la roue de véhicule (20), à distance de celle-ci, de manière parallèle par rapport à la direction de déplacement (F), selon l'une quelconque des revendications 1 à 8.
